# EUROPÄISCHE PATENTSCHRIFT

(11) **EP 0 733 094 B1**
(45) Veröffentlichungstag und Bekanntmachung des Hinweises auf die Patenterteilung: **20.05.1998**
(21) Anmeldenummer: 95902112.2
(22) Anmeldetag: 01.12.1994
(51) Int. Cl.: C11D 1/825, B01D 19/04

(54) **NICHTIONISCHE DETERGENSGEMISCHE**
NON-IONIC DETERGENT MIXTURES
MELANGES DETERGENTS NON IONIQUES

(30) Priorität: 10.12.1993 DE 4342214
(43) Veröffentlichungstag der Anmeldung: 25.09.1996
(73) Patentinhaber: Henkel Kommanditgesellschaft auf Aktien, 40191 Düsseldorf (DE)
(72) Erfinder: SCHMID, Karl, D-40288 Mettmann (DE); WEUTHEN, Manfred, D-42697 Solingen (DE); KOREN, Karin, D-40227 Düsseldorf (DE); STANISLOWSKI, Detlev, D-40882 Ratingen (DE)
(86) Internationale Anmeldenummer: EP9404001
(87) Internationale Veröffentlichungsnummer: WO9516015

(56) Entgegenhaltungen:
- EP-A- 0 161 537
- EP-A- 0 197 434
- DE-A- 3 928 600
- DE-C- 3 744 525
- DE-C- 4 243 643

## Beschreibung

### Gebiet der Erfindung

Die Erfindung betrifft nichtionische Detergenagemische auf Basis ausgewählter Mischethertypen sowie deren Verwendung zur Herstellung von oberflächenaktiven Mitteln.

### Stand der Technik

Für eine Vielzahl technischer Prozesse ist die Anwesenheit von Schaum äußerst unerwünscht. So kommt es z. B. sowohl bei der maschinellen Reinigung von Bier- oder Milchflaschen als auch der Spritzreinigung von Autamobilblechen nicht nur auf die reinigende bzw. entfettende Wirkung der eingesetzten oberflächenaktiven Mittel an, die Vermeidung von Schaum, der die Anlagenfunktionen stark beeinträchtigen kann, ist von gleich großer Bedeutung. Dies gilt um so mehr, als in vielen Fällen hochaktive, jedoch auch starkschäumende anionische Tenside eingesetzt werden.

Das Problem der Schaumregulierung ist freilich seit langer Zeit bekannt und dementsprechend sind aus dem Stand der Technik eine Vielzahl von mehr oder weniger überzeugenden Problemlösungen bekannt, die in zwei Gruppen eingeteilt werden können:

Bei der einen handelt es sich um Verfahren unter Zugabe von Entschäumern, bei denen es sich vielfach um paraffinische Kohlenwasserstoffe oder Siliconverbindungen handelt. Für die beschriebenen Anwendungen ist dies jedoch in den meisten Fällen unerwünscht. Bei der zweiten Gruppe von Verfahren handelt es sich um den Einsatz von oberflächenaktiven Mitteln, die selbst schaumarm sind und gegebenenfalls zusätzlich noch über entschäumende Eigenschaften verfügen. In der Regel handelt es sich hierbei um nichtionische Tenside oder tensidähnliche Systeme, wie beispielsweise Fettalkoholpropylenglycolether oder Blockpolymere von Ethylen- und Propylenglycol, die allerdings keine ausreichende biologische Abbaubarkeit aufweisen.

Als besonders effektive schaumarme Tenside haben sich endgruppenverschlossene Fettalkoholpolyglycolether, sogenannte "Mischether" am Markt etabliert, die beispielsweise von R. Piorr in **Fat.Sci.Technol. 89, 106 (1987)** beschrieben werden.

Auch die Verwendung von Mischethern als schaumarme Mittel ist in der Patentliteratur umfangreich beschrieben. So sind beispielsweise aus der **EP-A 0 124 815** (Henkel) Mischether mit 8 bis 18 Kohlenstoffatomen in der Fettalkyl- und 7 bis 12 Ethylenoxideinheiten in der Polyetherkette als schaumdrückende Zusätze zu schaumarmen Reinigungsmitteln bekannt. Für den gleichen Zweck werden in der **EP-B 0 303 928** (Henkel) Octyl- und/oder Decylmischether mit 3 bis 4 Ethylenoxid-Einheiten vorgeschlagen.

Für die Schaumdämpfung bei der Verarbeitung von Nahrungsmitteln sowie bei Fermentationsprozessen werden in der **EP-A 0 180 081** (BASF) Mischether mit 6 bis 12 Kohlenstoffatomen im Fettalkylrest und EO/PO/EO-Blöcken in der Polyetherkette vorgeschlagen. Gemäß der Lehre der **EP-B 0 324 340** (Henkel) können für diesen Zweck auch Mischether mit 6 bis 28 Kohlenstoffatomen im Fettalkylrest und 2 bis 10 Ethylenoxideinheiten in der Polyetherkette eingesetzt werden. Aus der **DE-A 39 28 600** (Henkel) sind desweiteren nichtionische Tensidgemische bekannt, die neben unterschiedlichen Mischethertypen auch nicht-endgruppenverschlossene Fettalkoholpolyalkylenglycolether enthalten.

Weiterhin werden in der **EP-A 0 420 802** (Ciba-Geigy) Netzmittel für die textile Vorbehandlung vorgeschlagen, die einen Gehalt an offenkettigen und/oder endgruppen-verschlossenen Fettalkoholpolyglycolethern aufweisen. Als geeignete Einsatzstoffe werden solche offenbart, die einen Fettalkylrest von mindestens 8, vorzugsweise 9 bis 14 Kohlenstoffatomen und 2 bis 24, vorzugsweise 4 bis 8 Alkylenoxid-Einheiten in der Polyetherkette aufweisen; sie können offenkettig oder aber mit einer C₁-C₈ Alkylgruppe, einem cycloaliphatischen Rest mit mindestens 5 Kohlenstoffatomen sowie einem Phenylniederalkyl- oder Styrylrest endgruppenverschlossen sein. Gemäß dem einzigen Ausführungsbeispiel wird ausschließlich die Verwendung eines offenkettigen Anlagerungsproduktes von 15 Mol Alkylenoxid an einen C₉-C₁₁-Oxoalkohol offenbart.

In der EP-A-0 197 434 (Henkel) werden wiederum endgruppenverschlossene Alkylpolyethylenglykolether als Tensidkomponente in schaumarmen Klarspülmitteln beschrieben, die einen Fettalkylrest mit 8 bis 18 Kohlenstoffatomen und 7 bis 16 Ethylenoxideinheiten in der Polyetherkette aufweisen und dabei mit einem C₁-C₄-Alkylrest endgruppenverschlossen sind. Gemäß der Lehre der EP-A-0 161 537 (BASF) sind endgruppenverschlossene Alkylpolyalkylenglykolether mit EO/PO/EO-Blöcken in der Polyetherkette und mit 8 bis 22 C-Atomen im Alkylrest als schaumarme, schaumdämpfende und biologisch abbaubare Tenside für industrielle Reiniungsprozesse geeignet, sofern der Endgruppenverschluß mit einem Methyl-, Ethyl- oder Allylrest erfolgt ist.

Aus der DE-C1 42 43 643 (Henkel) sind schließlich Mischether auf Basis von linearen Fettalkohol-PO-EO-Addukten bekannt, die 8 bis 10 Kohlenstoffatome im Fettalkylrest, 0,5 bis 2 Mol Propylenoxid und 7 bis 9 Mol Ethylenoxid im Molekül aufweisen und dabei mit einem C₁-C₄-Alkylrest endgruppenverschlossen sind.

Ein besonderes Problem, daß sich im Zusammenhang mit der Optimierung von Mischethern stellt, besteht darin, das Bedürfnis nach Produkten mit ausgezeichneten anwendungstechnischen Eigenschaften einerseits und hoher ökotoxikologischer Verträglichkeit andererseits auszugleichen. Konkret besteht eine besondere Aufgabe der Erfindung darin, Mischether in einer solchen Weise abzumischen, daß die Gemische nicht nur gute Reinigungs- und Schaumeigenschaften aufweisen, sondern gleichzeitig auch "readily biodegradable" und gegenüber aquatischen Lebensgeminschaften mindertoxisch (LC₅₀ > 1 mg/l) sind.

### Beschreibung der Erfindung

Gegenstand der Erfindung sind nichtionische Detergensgemische, enthaltend
a) Mischether der Formel **(I)**

   **R**^{**1**}**O(CH**_{**2**}**CH**_{**2**}**O)**_{**m**}**R**^{**2**} **(I)**

   in der R¹ für einen aliphatischen, linearen Alkyl- und/ oder Alkenylrest mit 12 bis 18 Kohlenstoffatomen, R² für einen Alkylrest mit 1 bis 4 Kohlenstoffatomen oder einen Benzylrest und m für Zahlen von 5 bis 15 steht, und
b1) Mischether der Formel **(II)**, 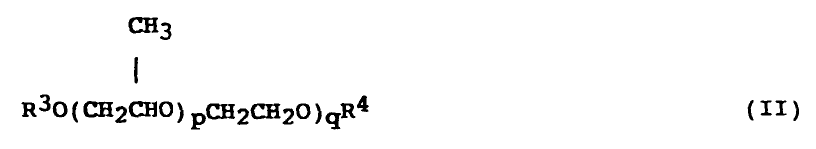 in der R³ für einen aliphatischen, linearen oder verzweigten Alkylrest mit 8 bis 10 Kohlenstoffatomen, R⁴ für einen Alkylrest mit 1 bis 4 Kohlenstoffatomen oder einen Benzylrest, p für Zahlen von 2 bis 3 und q für Zahlen von 8 bis 15 steht, und/oder
b2) Mischether der Formel **(III)**, 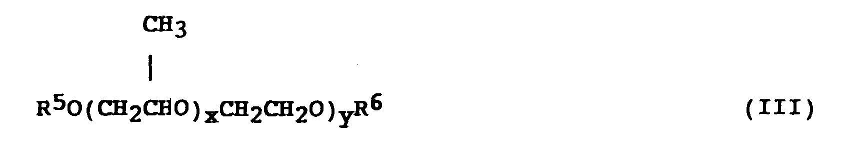 in der R⁵ für einen aliphatischen, linearen Alkylrest mit 12 bis 14 Kohlenstoffatomen, R⁶ für einen Alkylrest mit 1 bis 4 Kohlenstoffatomen oder einen Benzylrest, x für Zahlen von 0,5 bis 2 und y für Zahlen von 5 bis 10 steht.

Überraschenderweise wurde gefunden, daß die erfindungsgemäßen Tensidgemische nicht nur ausgezeichnete anwendungstechnische Eigenschaften aufweisen, sondern zudem im biologischen Endabbau einen Wert oberhalb von 60 % und gegenüber aquatischen Lebensgemeinschaften einen LC₅₀-Wert oberhalb von 1 mg/l aufweisen; die Tensidgenmische können somit als "readily biodegradable" und minderaquatoxisch eingestuft werden.

### Mischether

**Mischether** stellen bekannte Stoffe dar, die nach den einschlägigen Verfahren der präparativen organischen Chemie erhalten werden können. Üblicherweise erfolgt ihre Herstellung über den Weg der WILLIAMSON'schen Ethersynthese, bei dem man Fettalkoholpolyglycolether in Gegenwart starker Basen mit Alkylhalogeniden kondensiert. Verfahren zu ihrer Herstellung sind beispielsweise aus den Druckschriften **DE-OS 28 00 710** (Kuraray) und **DE-C1 37 44 525** (Henkel). Eine Übersicht von Piorr et al. zum Thema "Mischether" findet sich ferner in **Fat Sci.Technol. 89, 106 (1987)**.

Typische Beispiele für Mischether, die als Bestandteile a) der erfindungsgemäßen Gemische in Frage kommen, sind methyl-, ethyl- oder butyl-endgruppenverschlossene Anlagerungsprodukte von 5 bis 15, vorzugsweise 8 bis 12 Mol Ethylenoxid an lineare Kokosfettalkohole mit 12 bis 18, vorzugsweise 12 bis 14 Kohlenstoffatomen. Besonders bevorzugt ist ein C₁₂/₁₈-Kokosfettalkohol-10EO-n-butylether (Dehypon^{(R)} LT104, Henkel KGaA, Düsseldorf/FRG).

Als Komponente bl) kommen beispielsweise methyl-, ethyl- oder butyl-endgruppenverschlossene Anlagerungsprodukte von durchschnittlich zunächst 2 bis 3 Mol Propylenoxid und anschließend 8 bis 15 Mol Ethylenoxid an primäre Alkohole mit 8 bis 10 Kohlenstoffatomen in Frage. Besonders bevorzugt sind z.B. C_{8/10}-1,3PO-9EO-n-butylether, 2-Ethylhexyl-1,5PO-10EO-n-butylether oder Isodecyl-1,3PO-8EO-tert.butylether.

Als Komponente b2) kommen beispielsweise methyl-, ethyl- oder butyl-endgruppenverschlossene Anlagerungsprodukte von durchschnittlich zunächst 0,5 bis 2 Mol Propylenoxid und anschließend 5 bis 10 Mol Ethylenoxid an Fettalkohole mit 12 bis 14 Kohlenstoffatomen in Betracht. Ein typisches Beispiel ist C_{12/14}-1,3PO-9EO-n-butylether.

Die erfindungsgemäßen nichtionischen Detergensgemische können die Komponenten a) und b) im Gewichtsverhältnis von 25 : 75 bis 75 : 25 und vorzugsweise 40 : 60 bis 60 : 40 enthalten. Das Verhältnis der Komponenten bl : b2 untereinander kann 0 : 100 bis 100 : 0 betragen und liegt vorzugsweise bei 25 : 75 bis 75 : 25.

### Weitere nichtionische Inhaltsstoffe

Neben den genannten Mischethern der Formeln (I) bis (III) können die erfindungsgemäßen nichtionischen Detergensgemische weitere Mischether der Formel **(IV)** enthalten,

**R**^{**7**}**O(CH**_{**2**}**CH**_{**2**}**O)**_{**n**}**R**^{**8**} **(IV)**

in der R⁷ für einen aliphatischen, verzweigten Alkylrest mit 8 bis 18 Kohlenstoffatomen, R⁸ für einen Alkylrest mit 1 bis 4 Kohlenstoffatomen oder einen Benzylrest und n für Zahlen von 5 bis 15 steht. Hierzu kommen beispielsweise methyl-, ethyl- oder butyl-endgruppenverschlossene Anlagerungsprodukte von durchschnittlich 5 bis 15 Mol Ethylenoxid an Oxoalkohole mit 8 bis 18 Kohlenstoffatomen in Betracht. Ein typisches Beispiel ist Isotridecyl-10 EO-n-butylether. Der Anteil der Mischether der Formel **(IV)** kann 10 bis 40 Gew.-% - bezogen auf die Mischung - betragen.

Desweiteren können die erfindungsgemäßen Detergensgemische Fettalkoholpolyglycolether der Formel **(V)** enthalten,

**R**^{**9**}**O(CH**_{**2**}**CH**_{**2**}**O)**_{**z**}**H** **(V)**

in der R⁹ für einen Alkylrest mit 12 bis 14 Kohlenstoffatomen und z für Zahlen von 2 bis 4 steht. Typische Beispiele hierfür sind Anlagerungsprodukte von durchschnittlich 2 bis 4 Mol Ethylenoxid an Fettalkohole mit 12 bis 14 Kohlenstoffatomen wie etwa C_{12/14}-Kokosalkohol-3EO-Addukt. Die Polyglycolether können eine konventionelle, vorzugsweise jedoch eine eingeengte Homologenverteilung aufweisen. Der Anteil der Fettalkoholpolyglycolether der Formel (V) kann 10 bis 40 Gew.-% - bezogen auf die Mischung - betragen.

### Gewerbliche Anwendbarkeit

Die erfindungsgemäßen nichtionischen Detergensgemische zeichnen sich durch ausgezeichnete anwendungstechnische Eigenschaften aus, sind "readily biodegradable" und minderaquatoxisch.

Ein weiterer Gegenstand der Erfindung betrifft daher die Verwendung der erfindungsgemäßen nichtionsichen Detergensgemische zur Herstellung oberflächenaktiver Mittel, insbesondere Klarspüler, Reinigungsmittel für harte Oberflächen und Entschäumer für Wasch- und Reinigungsmittel.

Die folgenden Beispiele sollen den Gegenstand der Erfindung näher erläutern, ohne ihn darauf einzuschränken.

### Beispiele

I . Netzvermögen
Das Netzvermögen wurde nach der Tauchnetzmethode mit 1 g Aktivsubstanz/1, 20°C, in Wasser von 16°d bestimmt. Zu Einzelheiten der Methode sei auf **Tens.Surf.Det. 27**, **243 (1990)** verwiesen. Bestimmt wurde die Netzzeit tₙ in s. Die Ergebnisse sind in Tab.1 zusammengefaßt.
II. Schaumvermögen
Das Schaumvermögen wurde nach der Schlagschaummethode mit 1 g Aktivsubstanz/l, 20°C, in Wasser von 16°d bestimmt. Zu Einzelheiten der Methode sei auf **Tens.Surf. Det. 27, 243** (1990) verwiesen. Bestimmt wurde der Basisschaum (t=0) und der Schaumzerfall nach 5 min in ml. Die Ergebnisse sind in Tab.1 zusammengefaßt.
III. Biologischer Endabbau
Die Biologische Abbaubarkeit wurde nach der Methode des Geschlossenen Flaschentests untersucht. Bestimmt wurde die Abbaurate BSB/COD nach 30 Tagen. Zu Einzelheiten vgl. **Fette, Seifen, Anstrichmitt., 87, 421 (1985)**. Die Ergebnisse sind in Tab.2 zusammengefaßt.
IV. Aquatische Toxizität
Die aquatische Toxizität wurde gegenüber Fischen (Goldorfen), Daphnien und Algen bestimmt. Angegeben ist der LC₅₀-Wert, also die letale Konzentration für 50 % der Population. Die Ergebnisse sind in Tab.3 zusammengefaßt.

**Tab.1:**

| Netz- und Schaumvermögen | | | | | | | |
|---|---|---|---|---|---|---|---|
| Bsp. | A % | R | PO | EO | EGV | tₙ s | S⁰ ml |
| 1 | 50 | n-16/18 | - | 10 | 4 | 20 | 0 |
| | 50 | i-13 | | 10 | 4 | | |
| 2 | 50 | n-12/18 | - | 10 | 4 | 20 | 0 |
| | 50 | i-13 | - | 10 | 4 | | |
| 3 | 40 | n-12/18 | - | 10 | 4 | 22 | 0 |
| | 60 | n-8/10 | 2 | 10 | 4 | | |
| 4 | 40 | n-12/18 | - | 10 | 4 | 21 | 0 |
| | 30 | i-13 | - | 10 | 4 | | |
| | 30 | n-12/14 | 1 | 10 | 4 | | |
| V1 | 100 | n-12 | - | 8 | 4 | 28 | 0 |
| V2 | 100 | i-13 | - | 10 | 4 | 21 | 0 |
| Legende: A = Anteil an der Detergensmischung R = Alkoholrest PO = Propylenoxidgruppen EO = Ethylenoxidgruppen EGV = Endgruppenverschluß tₙ = Netzzeit S⁰ = Basisschaum | | | | | | | |

**Tab.3:**

| Biologische Abbaubarkeit Prozentangaben als Gew.-% | | | | | | |
|---|---|---|---|---|---|---|
| Bsp. | A % | R | PO | EO | EGV | GF-Test BSB/CSB |
| 5 | 50 | n-16/18 | - | 10 | 4 | > 60 |
| | 50 | i-13 | - | 10 | 4 | |
| 6 | 50 | n-12/18 | - | 10 | 4 | > 60 |
| | 50 | i-13 | - | 10 | 4 | |
| 7 | 40 | n-12/18 | - | 10 | 4 | > 60 |
| | 60 | n-8/10 | 2 | 10 | 4 | |
| 8 | 40 | n-12/18 | - | 10 | 4 | > 60 |
| | 30 | i-13 | - | 10 | 4 | |
| | 30 | n-12/14 | 1 | 10 | 4 | |
| V3 | 100 | n-12 | - | 8 | 4 | > 60 |
| V4 | 100 | i-13 | - | 10 | 4 | < 60 |

**Tab.3:**

| Toxizität gegenüber Wasserorganismen | | | | | | | | |
|---|---|---|---|---|---|---|---|---|
| Bsp. | A % | R | PO | EO | EGV | F. LC₅₀ mg/l | D. LC₅₀ mg/l | A. LC₅₀ mg/l |
| 9 | 50 | n-16/18 | - | 10 | 4 | > 1 | > 1 | > 1 |
| | 50 | i-13 | - | 10 | 4 | | | |
| 10 | 50 | n-12/18 | - | 10 | 4 | > 1 | > 1 | > 1 |
| | 50 | i-13 | - | 10 | 4 | | | |
| 11 | 40 | n-12/18 | - | 10 | 4 | > 1 | > 1 | > 1 |
| | 60 | n-8/10 | 2 | 10 | 4 | | | |
| 12 | 40 | n-12/18 | - | 10 | 4 | > 1 | > 1 | > 1 |
| | 30 | i-13 | - | 10 | 4 | | | |
| | 30 | n-12/14 | 1 | 10 | 4 | | | |
| V5 | 100 | n-12 | - | 8 | 4 | < 1 | < 1 | < 1 |
| V6 | 100 | i-13 | - | 10 | 4 | > 1 | > 1 | > 1 |
| Legende: F = Fische D = Daphnien A = Algen | | | | | | | | |

## Patentansprüche

1. Nichtionische Detergensgemische, enthaltend
a) Mischether der Formel **(I)**
**R**^{**1**}**O(CH**_{**2**}**CH**_{**2**}**O)**_{**m**}**R**^{**2**} **(I)**
in der R¹ für einen aliphatischen, linearen Alkyl- und/oder Alkenylrest mit 12 bis 18 Kohlenstoffatomen, R² für einen Alkylrest mit 1 bis 4 Kohlenstoffatomen oder einen Benzylrest und m für Zahlen von 5 bis 15 steht, und
b1) Mischether der Formel **(II)**, 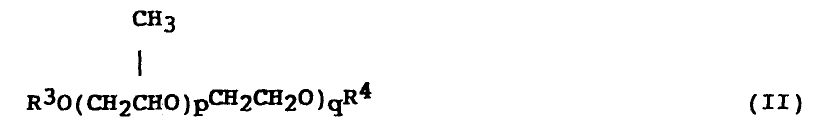 in der R³ für einen aliphatischen, linearen oder verzweigten Alkylrest mit 8 bis 10 Kohlenstoffatomen, R⁴ für einen Alkylrest mit 1 bis 4 Kohlenstoffatomen oder einen Benzylrest, p für Zahlen von 2 bis 3 und q für Zahlen von 8 bis 15 steht, und/oder
b2) Mischether der Formel **(III)**, 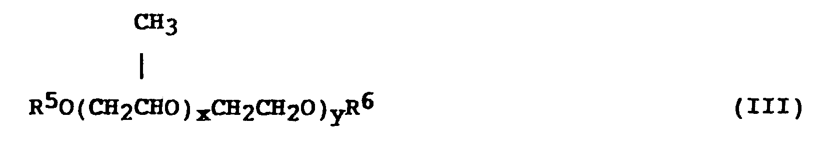 in der R⁵ für einen aliphatischen, linearen Alkylrest mit 12 bis 14 Kohlenstoffatomen, R⁶ für einen Alkylrest mit 1 bis 4 Kohlenstoffatomen oder einen Benzylrest, x für Zahlen von 0,5 bis 2 und y für Zahlen von 5 bis 10 steht.

2. Nichtionische Detergensgemische nach Anspruch 1, **dadurch gekennzeichnet**, daß die Komponenten a) und b) im Gewichtsverhältnis von 25 : 75 bis 75 : 25 enthalten sind.

3. Nichtionische Detergensgemische nach den Ansprüchen 1 und 2, **dadurch gekennzeichnet**, daß sie Mischether der Formel **(IV)** enthalten,
**R**^{**7**}**O(CH**_{**2**}**CH**_{**2**}**O)**_{**n**}**R**^{**8**} **(IV)**
in der R⁷ für einen aliphatischen, verzweigten Alkylrest mit 8 bis 18 Kohlenstoffatomen, R⁸ für einen Alkylrest mit 1 bis 4 Kohlenstoffatomen oder einen Benzylrest und n für Zahlen von 5 bis 15 steht.

4. Nichtionische Detergensgemische nach den Ansprüchen 1 bis 3, **dadurch gekennzeichnet**, daß sie Fettalkoholpolyglycolether der Formel **(V)** enthalten,
**R**^{**9**}**O(CH**_{**2**}**CH**_{**2**}**O)**_{**z**}**H** **(V)**
in der R⁹ für einen Alkylrest mit 12 bis 14 Kohlenstoffatomen und z für Zahlen von 2 bis 4 steht.

5. Verwendung von nichtionischen Detergensgemischen nach Anspruch 1 zur Herstellung von oberflächenaktiven Mitteln.

## Claims

1. Nonionic detergent mixtures containing
a) mixed ethers corresponding to formula **(I)**:
R¹O(CH₂CH₂O)ₘR² **(I)**
in which R¹ is an aliphatic linear alkyl and/or alkenyl radical containing 12 to 18 carbon atoms, R² is an alkyl radical containing 1 to 4 carbon atoms or a benzyl radical and m is a number of 5 to 15, and
b1) mixed ethers corresponding to formula **(II)**: 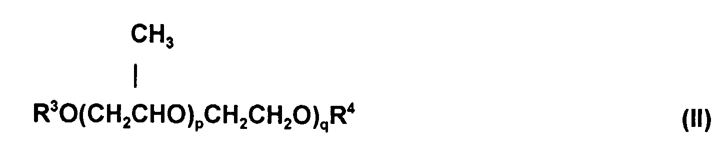 in which R³ is an aliphatic, linear or branched alkyl radical containing 8 to 10 carbon atoms, R⁴ is an alkyl radical containing 1 to 4 carbon atoms or a benzyl radical, p is a number of 2 to 3 and q is a number of 8 to 15, and/or
b2) mixed ethers corresponding to formula **(III)**: 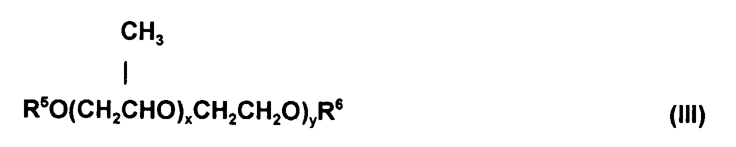 in which R⁵ is an aliphatic, linear alkyl radical containing 12 to 14 carbon atoms, R⁶ is an alkyl radical containing 1 to 4 carbon atoms or a benzyl radical, x is a number of 0.5 to 2 and y is a number of 5 to 10.

2. Nonionic detergent mixtures as claimed in claim 1, characterized in that component a) and component b) are present in a ratio by weight of 25:75 to 75:25.

3. Nonionic detergent mixtures as claimed in claims 1 and 2, characterized in that they contain mixed ethers corresponding to formula **(IV)**:
**R**^{**7**}**O(CH**_{**2**}**CH**_{**2**}**O)**_{**n**}**R**^{**8**} **(IV)**
in which R⁷ is an aliphatic branched alkyl radical containing 8 to 18 carbon atoms, R⁸ is an alkyl radical containing 1 to 4 carbon atoms or a benzyl radical and n is a number of 5 to 15.

4. Nonionic detergent mixtures as claimed in claims 1 to 3, characterized in that they contain fatty alcohol polyglycol ethers corresponding to formula **(V)**:
**R**^{**9**}**O(CH**_{**2**}**CH**_{**2**}**O)**_{**z**}**H** **(V)**
in which R⁹ is an alkyl radical containing 12 to 14 carbon atoms and z is a number of 2 to 4.

5. The use of the nonionic detergent mixtures claimed in claim 1 for the production of surface-active formulations.

## Revendications

1. Mélanges détergents non ioniques contenant
a) des éthers mixtes de formule (I)
R¹O(CH₂CH₂O)ₘR² (I)
dans laquelle R¹ représente un radical alkyle et/ou alcényle aliphatique linéaire en C₁₂ à C₁₈, R² représente un radical alkyle en C₁ à C₄ ou un radical benzyle et m représente des nombres allant de 5 à 15, et
b1) des éthers mixtes de formule (II) 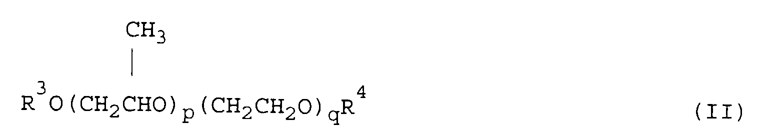 dans laquelle R³ représente un radical alkyle aliphatique, linéaire ou ramifié en C₈ à C₁₀, R⁴ représente un radical alkyle en C₁ à C₄ ou un radical benzyle, p représente des nombres de 2 à 3 et q représente des nombres de 8 à 15, et/ou
b2) des éthers mixtes de formule (III), 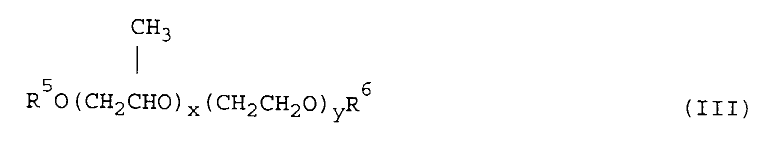 dans laquelle R⁵ représente un radical alkyle aliphatique, linéaire en C₁₂ à C₁₄, R⁶ représente un radical alkyle en C₁ à C₄ ou un radical benzyle, x représente des nombres de 0,5 à 2 et y représente des nombres allant de 5 à 10.

2. Mélanges détergents non ioniques selon la revendication 1,
caractérisés en ce que
les composants a) et b) sont contenus dans un rapport pondéral de 25:75 à 75:25.

3. Mélanges détergents non ioniques selon les revendications 1 et 2,
caractérisés en ce qu'
ils contiennent des éthers mixtes de formule (IV)
R⁷O(CH₂CH₂O)ₙR⁸ (IV)
dans laquelle R⁷ représente un radical alkyle aliphatique ramifié ayant de 8 à 18 atomes de carbone, R⁸ représente un radical alkyle ayant de 1 à 4 atomes de carbone ou un radical benzyle et n représente des nombres de 5 à 15.

4. Mélanges détergents non ioniques selon les revendications 1 à 3,
caractérisés en en ce qu'
ils contiennent des polyglycoléthers d'alcools gras de formule (V)
R⁹O(CH₂CH₂O)_{z}H (V)
dans laquelle R⁹ représente un radical alkyle ayant de 12 à 14 atomes de carbone, et z représente des nombres de 2 à 4.

5. Utilisation des mélanges détergents non ioniques selon la revendication 1 pour la fabrication d'agents tensioactifs.
